# EUROPÄISCHE PATENTSCHRIFT

(11) **EP 0 799 877 B1**
(45) Veröffentlichungstag und Bekanntmachung des Hinweises auf die Patenterteilung: **18.07.2001**
(21) Anmeldenummer: 97105005.9
(22) Anmeldetag: 25.03.1997
(51) Int. Cl.: C09K 19/00, C09K 19/38, C09D 5/36

(54) **Polymerisierte flüssigkristalline Zusammensetzungen**
Polymerized liquid crystal compositions
Compositions liquides cristallines polymérisées

(30) Priorität: 03.04.1996 DE 19613314
(43) Veröffentlichungstag der Anmeldung: 08.10.1997
(73) Patentinhaber: BASF AKTIENGESELLSCHAFT, 67056 Ludwigshafen (DE)
(72) Erfinder: Keller, Harald, Dr., 67069 Ludwigshafen (DE); Siemensmeyer, Karl, Dr., 67227 Frankenthal (DE); Schuhmacher, Peter, Dr., 68163 Mannheim (DE); Müller, Manfred, Dr., 45894 Gelsenkirchen (DE); Zentel, Rudolf, Prof. Dr., 55283 Nierstein (DE); Maxein, Georg, 56566 Neuwied (DE)

(56) Entgegenhaltungen:
- WO-A-96/02597
- DE-A- 4 418 076
- ADVANCED MATERIALS, Bd. 9, Nr. 2, Seiten 159-162, XP000681088 M. MÜLLER ET AL.: "solid opalescent films originating from urethanes of cellulose"
- CELLULOSE, 1.Januar 1990, Seiten 379-384, XP000522438 YOSHIHIKO ONOGI: "SOLIDIFIED STRUCTURE OF CELLULOSE DERIVATIVES FROM THE LIQUID CRYSTALLINE STATE"
- JOURNAL OF MACROMOLECULAR SCIENCE - PHYSICS, Bd. 34, Nr. 4, 1995, Seiten 357-367, XP002034859 JIANG ET AL.: "orientation of polymer chains in oriented (E-CE)C/AA liquid crystalline solutions"
- JOURNAL OF POLYMER SCIENCE, POLYMER PHYSICS EDITION, MAY 1985, USA, Bd. 23, Nr. 5, ISSN 0098-1273, Seiten 1043-1052, XP002034860 NISHIO Y ET AL: "Morphological studies of liquid-crystalline cellulose derivatives. I. Liquid-crystalline characteristics of hydroxypropyl cellulose in 2-hydroxyethyl methacrylate solutions and in polymer composites prepared by bulk polymerization"

## Beschreibung

Gegenstand der vorliegenden Erfindung sind polymerisierte flüssigkristalline Zusammensetzungen, erhältlich durch Strahlungshärtung von Mischungen, enthaltend
a) ein oder mehrere Cellulosederivate, in denen die Hydroxylgruppen der Cellulose ganz oder teilweise durch -OR, -O-CO-NH-R, -O-CO-R oder -O-CO-OR ersetzt sind, wobei die Reste R gleich oder verschieden sein können und aliphatische oder aromatische Reste mit bis zu 20 C-Atomen bedeuten,
b) ein oder mehrere nicht flüssigkristalline polymerisierbare Monomere und
c) gewünschtenfalls weitere Zusätze.

Weiterhin sind Gegenstand der vorliegenden Erfindung ein Verfahren zur Beschichtung von Substraten mit den flüssigkristallinen Zusammensetzungen, ein Verfahren zur Herstellung von Pigmenten, Lacke, welche diese Pigmente enthalten, die Verwendung der Lacke zum Lackieren von Fahrzeugkarosserien sowie die Verwendung der polymerisierten flüssigkristallinen Zusammensetzungen als Beschichtungsmittel für Gebrauchsgegenstände.

Von vielen Cellulosederivaten ist bekannt, daß sie neben festen und flüssigen Aggregatzuständen auch flüssigkristalline Phasen ausbilden können. Aufgrund der Chiralität des Cellulosemoleküls sind diese flüssigkristallinen Phasen häufig cholesterisch, d.h. die Moleküle bilden, ähnlich wie Cholesterinderivate, helixartige Überstrukturen aus. An dieser Helixstruktur wird Licht bestimmter Wellenlänge, je nach Ganghöhe der Helix, selektiv reflektiert. Die Wellenlänge und damit die Farbe des reflektierten Lichts hängen von der Ganghöhe der Helix und dem mittleren Brechungsindex der flüssigkristallinen Mischung ab. Die Wellenlänge des reflektierten Lichts kann dabei vom UV-Bereich bis in den IR-Bereich variiert werden.

Verschiedene Cellulosederivate bilden auch in Gegenwart von Lösungsmitteln cholesterisch flüssigkristalline Phasen, sogenannte lyotrope Phasen, aus (s. beispielsweise D.G. Gray, J. Appl. Polym. Symp. 37, 179 (1983). Dabei hängt der flüssigkristalline Zustandsbereich von der Art des Derivats, von der Temperatur, von der Konzentration und von der Art des Lösungsmittels ab.

Um die Farbeffekte der lyotropen Cellulosederivate z.B. in Beschichtungsmitteln, wie Lacken, zu nutzen, ist eine Fixierung einer definierten cholesterischen Ordnung vorteilhaft. Um eine solche Fixierung zu erreichen, wurde versucht, Cellulosederivate in einem polymerisierbaren Lösungsmittel (Hydroxymethylmethacrylat) unter Ausbildung einer lyotropen cholesterischen flüssigkristallinen Phase zu lösen und diese Ordnungsstruktur durch thermische Polymerisation zu fixieren (Y. Nishio et al., J. Polym. Sci., Polym. Phys. Ed 23, 1043 (1985).

Im Verlauf der thermischen Polymerisation entstehen jedoch inhomogene Phasen, welche nur einen schwachen Farbeindruck aufweisen.

Aufgabe der vorliegenden Erfindung war es daher, polymerisierte flüssigkristalline Zusammensetzungen aus in polymerisierbaren Lösungsmitteln gelösten Cellulosederivaten bereitzustellen, die einen dauerhaften, kräftigen Farbeindruck aufweisen.

Demgemäß wurden die eingangs genannten polymerisierten flüssigkristallinen Zusammensetzungen gefunden.

Geeignete Cellulosederivate sind solche, bei denen die Hydroxylgruppen ganz oder teilweise durch die oben genannten Ether-, Urethan-, Ester- oder Carbonatgruppen ersetzt sind.

Als aliphatische Reste R in diesen Gruppen kommen beispielsweise C₁-C₂₀-Alkylgruppen wie Methyl, Ethyl, n-Propyl, Isopropyl, n-Butyl, Isobutyl, sec.-Butyl, tert.-Butyl, n-Pentyl, Isopentyl, sec.-Pentyl, tert.-Pentyl, Neopentyl, Hexyl, Heptyl, Octyl, 2-Ethylhexyl, Nonyl, Decyl, Undecyl, Dodecyl, Tridecyl, Tetradecyl, Hexadecyl, Octadecyl und Eicosyl in Betracht. In diesen Alkylresten können nichtbenachbarte CH₂-Gruppen durch Sauerstoff, Schwefel oder (C₁-C₄)-Alkylimino ersetzt sein. Die Alkylgruppen können auch z.B. durch Halogen, insbesondere Fluor oder Chlor, Cyano, Nitro oder Oxo substituiert sein.

Als aromatische Reste R kommen beispielsweise Phenyl oder Naphthyl in Betracht, wobei diese Ringsysteme durch die oben genannten Alkylgruppen, Alkoxygruppen, Perfluoralkylgruppen, Halogene wie Fluor, Chlor, Brom oder Jod, Cyano oder Nitro substituiert sein können.

Bevorzugte Reste R sind C₁-C₁₂-Alkyl, wobei bis zu 4 nicht benachbarte CH₂-Gruppen durch Sauerstoff ersetzt sein können, Phenyl oder durch C₁-C₆-Alkyl, C₁-C₆-Alkoxy, C₁-C₆-Perfluoralkyl, Halogen, Cyano oder Nitro substituiertes Phenyl.

Dabei können sowohl die Gruppen, welche die Hydroxygruppe der Cellulose ersetzen, als auch die Reste R jeweils gleich oder verschieden sein.

Besonders bevorzugte polymerisierte flüssigkristalline Zusammensetzungen sind solche, in denen die Hydroxylgruppen der Cellulose ganz oder teilweise durch gleiche oder verschiedene Reste 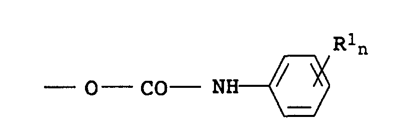 ersetzt sind, wobei R¹ Chlor, Methyl, Ethyl oder tert.-Butyl und n 0,1, 2 oder 3 bedeuten. n ist dabei bevorzugt 0 oder 1, R¹ ist bevorzugt Chlor, wobei sich ein Chloratom, vorzugsweise in der m-Position befindet.

Auch die Größe des Cellulosemoleküls hat Einfluß auf die flüssigkristallinen Eigenschaften der lyotropen Phasen. Cholesterische Phasen lassen sich in einem breiten Kettenlängenbereich der Cellulose beobachten. Bevorzugt sind Kettenlängen zwischen 5 und 500 Glukoseeinheiten, besonders bevorzugt Kettenlängen zwischen 30 und 200 Glukoseeinheiten.

Die Mischungen, aus denen die erfindungsgemäßen polymerisierten flüssigkristallinen Zusammensetzungen erhalten werden können, enthalten als Lösungsmittel für die Cellulosederivate ein oder mehrere nicht flüssigkristalline polymerisierbare Monomere. Als polymerisierbare Monomere sind im allgemeinen alle strahlungshärtbaren Monomeren geeignet, wie Acrylate, Methacrylate, Vinylether, Epoxide, Maleinsäureester, Crotonsäureester oder N-Vinylpyrrolidon, oder vinylaromatische Monomere, wie Styrol, substituierte Styrole, Zimtsäureester oder N-Vinylimidazol.

Bevorzugte nicht flüssigkristalline polymerisierbare Monomere stammen aus der Gruppe der Acrylate, Methacrylate, Vinylether, Epoxide, Maleinsäureester, Crotonsäureester oder N-Vinylpyrrolidon, wobei Acrylate und Methacrylate besonders bevorzugt sind.

Weiterhin besonders bevorzugte nicht flüssigkristalline polymerisierbare Monomere sind solche, die zwei oder mehr polymerisierbare Gruppen enthalten. Diese Monomeren polymerisieren zu dreidimensionalen Netzwerken, die sehr stabil sind und eine besonders dauerhafte stabile Fixierung des cholesterisch flüssigkristallinen Ordnungszustandes ermöglichen.

Beispiele für geeignete polymerisierbare Monomere sind 2-Ethoxyethylacrylat, Diethylenglykoldiacrylat, Ethylenglykoldimethacrylat, Diethylenglykoldimethacrylat, Triethylenglykoldimethacrylat, Diethylenglykolmonomethyletheracrylat, Phenoxyethylacrylat und Tetraethylenglykoldimethacrylat.

Die Mischungen, aus denen die erfindungsgemäßen polymerisierten flüssigkristallinen Zusammensetzungen erhalten werden können, enthalten gewünschtenfalls auch weitere Zusätze. Geeignete Zusätze sind, besonders für photochemisch härtbare Mischungen, z.B. Photoinitiatoren. Als Photoinitiatoren kommen alle handelsüblichen Photoinitiatoren in Betracht, wie Isobutyl-benzoinether, 2,4,6-Trimethylbenzoyldiphenylphosphinoxid, 1-Hydroxycyclohexylphenylketon, 2-Benzyl-2-dimethylamino-1-(4-morpholinophenyl)-furan-1-on, Mischungen von Benzophenon und 1-Hydroxycyclohexyl-phenylketon, 2,2-Dimethoxy-2-phenylacetophenon, perfluorierte Diphenyltitanocene, 2-Methyl-1-(4-[methylthio]phenyl)-2-(4-morpholinyl)-1-propanon, 2-Hydroxy-2-methyl-1-phenyl-propan-1-on, 4-(2-Hydroxyethoxy)phenyl-2-hydroxy-2-propylketon, 2,2-diethoxyacetophenon, 4-benzoyl-4'-methyldiphenylsulfid, Ethyl-4-(dimethylamino)benzoat, Mischungen von 2-Isopropylthioxanthon und 4-Isopropyl-thioxanthon, 2-(Dimethylamino)ethylbenzoat, d,l-Campherchinon, Ethyl-d,l-campherchinon, Mischungen von Benzophenon und 4-Methylbenzophenon, Benzophenon, 4,4'-Bisdimethylamin-benzophenon, (η⁵-Cyclopentadienyl) (η⁶-isopropylphenyl)-Eisen(II)-hexafluorophosphat, Triphenylsulfoniumhexafluorophosphat oder Mischungen von Triphenylsulfoniumsalzen.

Auch kommen als weitere Zusätze beispielsweise nicht polymerisierbare Lösungsmittel, Farbstoffe, Pigmente, insbesondere Schwarzpigmente, polymere Bindemittel, Verlaufshilfsmittel und Dispergiermittel in Betracht.

Die Gewichtsanteile der Cellulosederivate, der nicht flüssigkristallinen polymerisierbaren Monomere sowie der gewünschtenfalls enthaltenen weiteren Zusätze können in Bereichen, die von der chemischen Struktur der Derivate und des polymerisierbaren Monomeren abhängen, variieren. Im allgemeinen wird der Anteil der Cellulosederivate an der Gesamtmenge der Mischung (= 100 Gew.-%) zwischen 10 und 90 Gew.-%, bevorzugt zwischen 20 und 50 Gew.-% liegen. Der Anteil der polymerisierbaren Monomeren liegt im allgemeinen zwischen 10 und 90 Gew.-%, bevorzugt zwischen 50 und 80 Gew.-%. Die Konzentration der weiteren Zusätze hängt von der Art des Zusatzes ab und bewegt sich in den technisch üblicherweise verwendeten Konzentrationsbereichen.

Ein geeignetes Verfahren zur Beschichtung von Substraten mit den genannten Mischungen ist dadurch gekennzeichnet, daß man eine derartige Mischung auf ein Substrat aufträgt und durch Licht oder Elektronenstrahlen polymerisiert.

Geeignete Substrate sind z.B. Glas, Metall, Kunststoff, Holz und Papier, beispielsweise auch Folien. Der Auftrag kann durch verschiedene Techniken, wie Streichen, Spritzen, Tauchen, Drucken, Rollen oder Gießen, z.B. über einen Gießspalt, erfolgen. Der cholesterische Ordnungszustand stellt sich im allgemeinen spontan ein. Teilweise ist die Einwirkung zusätzlicher Kräfte, etwa durch Rakeln oder das Anlegen elektrischer oder magnetischer Felder, vorteilhaft. Die Beschichtung erfolgt vorteilhaft in dünnen Schichten, z.B. von 5 bis 100 µm. Besonders brillante Farbeindrücke erhält man, wenn die Beschichtung auf einen dunklen Hintergrund erfolgt. Nach dem Auftrag und gegebenenfalls der Orientierung der flüssigkristallinen Mischung erfolgt die Strahlungshärtung.

Aus den erfindungsgemäßen Polymerisaten flüssigkristalliner Zusammensetzungen lassen sich auch farbige Pigmente herstellen, z.B. in dem man eine der oben genannten Mischungen auf ein Substrat aufträgt, durch Licht oder Elektronenstrahlen polymerisiert, die Schicht vom Substrat ablöst und zu Pigmentpartikeln zerkleinert. Als Substrat dient dabei vorteilhaft eine Folie oder die Oberfläche einer Walze. Die Schichtdicke liegt vorteilhaft zwischen 2 und 100 µm, besonders bevorzugt zwischen 5 und 10 µm. Die Zerkleinerung der abgelösten Schicht erfolgt im allgemeinen durch Mahlen in dem Fachmann bekannter Weise bis zu einer Partikelgröße, bei der der mittlere Durchmesser größer als die Schichtdicke ist, so daß plättchenförmige Pigmentpartikel entstehen. Diese plättchenförmigen Pigmente legen sich z.B. bei einer Verwendung in Lacken auf die Oberfläche der Substrate, so daß eine Vorzugsrichtung der Orientierung wie nach der ursprünglichen Beschichtung ausgebildet wird. Dadurch wird der gewünschte Farbeffekt erzielt.

Die erfindungsgemäßen polymerisierten Zusammensetzungen lassen sich vorteilhaft als Beschichtungsmaterial für Gebrauchsgegenstände verwenden. Besonders wirkungsvoll ist die Beschichtung von Fahrzeugen, wie Automobilen und Fahrrädern, von Verpackungen und Etiketten sowie von Schmuckgegenständen.

Die Beschichtung kann dabei direkt oder durch Lacke, welche erfindungsgemäß hergestellte Pigmente enthalten, erfolgen. Insbesondere zum Lackieren von großflächigen Substraten, wie Fahrzeugkarosserien, ist die Verwendung von Lacken mit erfindungsgemäß hergestellten Pigmenten von Vorteil.

Die Erfindung zeigt zahlreiche Vorteile: Durch die Strahlungshärtung kann ein Farbton unabhängig von der Temperatur eingestellt und fixiert werden. Die Härtung erfolgt dabei so schnell, daß keine Entmischungen oder Phasenveränderungen im Verlauf des Härtungsprozesses auftreten. Bei der Härtung durch Elektronenstrahlen kann auf den Zusatz von Polymerisationsinitiatoren ganz verzichtet werden. Durch Abdecken von Oberflächenbereichen ist eine feine Strukturierung der farbigen Bereiche möglich. Da die Farbe der Selektierreflexion auch von der Temperatur während der Vernetzung abhängt, kann die Farbe ohne Änderung der Zusammensetzung der polymerisierbaren Mischung variiert werden. So ist es beispielsweise möglich, durch Abdecken bei einer Temperatur nur bestimmte Bereiche einer Oberfläche zu belichten und zu vernetzen und anschließend bei einer anderen Temperatur andere Bereiche zu härten. Auf diese Weise lassen sich auch Farbmuster erzeugen. Die polymerisierten Zusammensetzungen zeigen brillante Farbtöne mit blickwinkelabhängigen Farbeindruck.

### Beispiel 1

a) Herstellung von Cellulosecarbanilid
   20 g Cellulosepropionat (mittleres Molekulargewicht ca. 15000 g/mol) wurden in 125 ml Wasser und 25 g Natriumhydroxid gelöst und 2,5 Stunden bei 0°C gerührt. Anschließend wurde mit Salzsäure neutralisiert, die Cellulose wurde abfiltriert, mit Wasser gewaschen und durch azeotrope Destillation mit Toluol getrocknet. Das restliche Toluol wurde durch Vakuumdestillation entfernt.
   Die Cellulose wurde unter Wasserausschluß in 210 ml Pyridin suspendiert. Bei 80°C wurden innerhalb von 5 Minuten 50 ml Phenylisocyanat zugetropft und anschließend wurde 48 Stunden bei gleicher Temperatur gerührt. Danach wurde das Lösungsmittel abdestilliert und das Produkt durch Zugabe von 1 l Methanol ausgefällt, in 600 ml Aceton aufgenommen und nochmals durch Zugabe von 1 l Methanol gefällt.
   Ausbeute 21,0 g
   - IR-Spektrum:: 3400 cm⁻¹ (NH)
   3300 cm⁻¹ (NH)
   1730 cm⁻¹ (C=O)
   1600 cm⁻¹ (C=C)
   1530 cm⁻¹ (C=C)
b) Herstellung einer selektiv reflektierenden Folie
   Eine Mischung aus 2,80 g Cellulosecarbanilid, 4,00 g Diethylenglykoedimethacrylat und 60 mg des Photoinitiators 2,4,6-Trimethylbenzoyldiphenylphosphinoxid wurde 24 Stunden gerührt. 2 g der Mischung wurde auf eine Glasplatte aufgetragen und mit einer zweiten Glasplatte abgedeckt. Nach 48 Stunden wurde die Schicht mit einer UV-A-Lampe belichtet. Der polymerisierte folienartige Film wurde von der Glasplatte entfernt. Der transparente Film wies Selektivreflexion mit einem Wellenlängenmaximum von 610 nm auf. Die Folie zeigte bei direkter Aufsicht eine rote, bei seitlicher Betrachtung eine grüne Farbe.

### Beispiel 2

### Herstellung eines gemischten Celluloseurethans

Analog zu Beispiel 1 wurden 16,7 g Celluloseacetat (mittleres Molekulargewicht ca. 29000 g/mol) zu Cellulose verseift. Die Cellulose wurde dann mit einer Mischung aus 35 ml Phenylisocyanat und 15 ml 3-Chlorphenylisocyanat umgesetzt und wie beschrieben aufgearbeitet.
- Ausbeute:: 21,3 g
- IR-Spektrum:: charakteristische Banden wie in Beispiel 1

### Herstellung von selektiv reflektierenden Folien

### Beispiel 3

Analog zu Beispiel 1 wurde eine Folie aus 3,20 g des gemischten Celluloseurethans gemäß Beispiel 2 und 3,99 g 2-Ethoxyethylacrylat sowie 60 mg des Photoinitiators hergestellt. Die Selektivreflexion lag bei 620 nm. Der Farbwechsel entsprach dem von Beispiel 1.

### Beispiel 4

Analog zu Beispiel 1 wurde eine Folie aus 3,00 g des gemischten Celluloseurethans gemäß Beispiel 2 und 3,34 g 2-Ethoxyethylacrylat sowie 45 mg des Photoinitiators hergestellt. Die Selektivreflexion lag bei 515 nm. Die Folie erschien bei direkter Aufsicht grün, bei seitlicher Betrachtung blau.

### Beispiel 5

Analog zu Beispiel 1 wurde eine Folie aus 3,23 g des gemischten Celluloseurethans gemäß Beispiel 2 und 4,00 g Diethylenglykoldiacrylat sowie 66 mg des Photoinitiators hergestellt. Die Selektivreflexion lag bei 630 nm. Die Folie erschien bei direkter Aufsicht rot, bei seitlicher Betrachtung blau.

### Beispiel 6

a) Analog zu Beispiel 1 wurde eine Folie aus 2,01 g des gemischten Celluloseurethans gemäß Beispiel 2 und 1,50 g Diethylenglykoldiacrylat und 1,02 g Triethylenglykoldimethacrylat sowie 43 mg des Photoinitiators hergestellt. Die Selektivreflexion lag bei 470 nm. Die Folie erschien bei direkter Aufsicht blau, bei seitlicher Betrachtung farblos.
b) Eine Mischung aus 1g des gemischten Celluloseurethans gemäß Beispiel 2, 0,5 g Phenoxyethylacrylat, 2,5 g Aceton sowie 16 mg des Photoinitiators wurde mit einem Kastenrakel mit 400µm Rakelspalt auf ein schwarz grundiertes Blech aufgetragen. Nach dem Verdunsten des Acetons erhielt man einen rötlichen Lackfilm.

### Beispiel 7

2,0 g der Cellulose aus Beispiel 2 wurden in 50 ml Pyridin suspendiert und analog zu Beispiel 1 mit einer Mischung aus 7 ml Phenylisocyanat und 3 ml 3-Chlorphenylisocyanat umgesetzt. Die Aufarbeitung erfolgte wie beschrieben. Analog zu Beispiel 1 wurden 160 mg des gemischten Celluloseurethans, 200 mg Diethylenglykoldimethacrylat und 4 mg des Photoinitiators vermischt und aliquote Teile der Mischung zwischen zwei Deckgläser gegeben. Die Deckgläser wurden für jeweils 3 Stunden temperiert und dann mit UV-Licht bestrahlt. Die entstandenen Filme zeigten in Abhängigkeit von der Temperatur bei der Härtung unterschiedliche Selektivreflexionen:

| Umsetzungstemperatur | Absorptionsmaximum | Farbe |
|---|---|---|
| 40°C | 430 nm | blau |
| 50°C | 470 nm | türkis |
| 60°C | 515 nm | türkis |
| 75°C | 570 nm | grün |

### Beispiel 8

Analog zu Beispiel 2 wurde Cellulose mit verschiedenen Mischungen aus Phenylisocyanat und 3-Chlorphenylisocyanat umgesetzt. Jeweils 4,5 g der Produkte wurden mit 5,5 g Tetraethylenglykoldimethacrylat umgesetzt und bei unterschiedlichen Temperaturen analog zu Beispiel 7 gehärtet. Die entstandenen Filme zeigten unterschiedliche Selektivreflexionen.

| Molverhältnis Phenylisocyanat/Chlorphenylisocyanat | Umsetzungstemperatur | Absorptionsmaximum | Farbe |
|---|---|---|---|
| 0/100 | 60°C | <400 nm | violett |
| 70/30 | 20°C | 405 nm | blau |
| 70/30 | 60°C | 585 nm | rotbraun |
| 80/20 | 20°C | 750 nm | rot |

### Beispiel 9

### Herstellung von Cellulose-3-chlorphenylurethan

18 g Cellulose, die analog zu Beispiel 2 aus Celluloseacetat hergestellt wurde, wurden unter Wasserausschluß in 360 g Pyridin suspendiert. Bei 90°C wurden innerhalb von 5 Minuten 133 g 3-Chlorphenylisocyanat zugetropft und anschließend 138 Stunden bei gleicher Temperatur gerührt. Die Ansatzlösung wurde filtriert und am Rotationsverdampfer auf 200 ml eingeengt. Danach wurde das Produkt in 2 1 einer Mischung aus 95 T. Methanol und 5 T. Wasser gefällt.
- Ausbeute:: 48 g

### Beispiel 10

### Herstellung von Cellulose-(3-trifluormethyl)phenylurethan

Analog zu Beispiel 1 wurden 33.4 g Celluloseacetat (mittleres Molekulargewicht ca. 29000 g/mol) zu Cellulose verseift. 5.0 g der auf diese Weise erhaltenen Cellulose wurden in 150 ml trockenem Pyridin suspendiert und auf 80° C erwärmt. Dann wurden 27 g 3-(Trifluormethy)phenylisocyanat zugegeben und unter Ausschluß von Luftfeuchtigkeit 2 Tage bei 80° C gerührt. Die Reaktionsmischung wurde in einer Mischung von 500 ml Methanol und 250 ml Wasser gefällt. Der Niederschlag wurde abfiltriert, in 200 ml Aceton gelöst und zentrifugiert. Dann wurde die Lösung in 400 ml Wasser gefällt, der Niederschlag wurde abfiltriert und getrocknet.
- Ausbeute:: 19.4 g
- IR-Spektrum:: 3400 cm⁻¹ (N-H)
1720 cm⁻¹ (C=O)
1600 cm-1 (C=C arom.)
1550 cm-1 (C=C arom.)

### Beispiel 11

### Molekulargewichtsabbau von Cellulose-(3-trifluormethyl)phenylurethan

15 g Cellulose-(3-trifluormethyl)phenylurethan, die gemäß Beispiel 10 hergestellt wurde, wurde in 110 ml Ethylenglykol-monomethylether gelöst. Unter Einleiten von Argon wurde die Lösung auf 100° C erwärmt. Dann wurde eine Lösung von 3.5 g p-Toluolsulfonsäure-monohydrat in 10 ml Ethylenglykol-monomethylether zugegeben und die homogene Lösung wurde unter Argon bei 100° C gerührt. Nach 1h, 2h, 3h, 4h und 6h wurden jeweils 20 ml der Reaktionslösung entnommen und in je 50 ml Wasser gefällt. Nach 8h wurde die restliche Reaktionslösung in 60 ml Wasser gefällt. Die einzelnen Fraktionen wurden filtriert und getrocknet. Ein Vergleich der IR-Spektren des Cellulose-(3-trifluormethyl)phenylurethans aus Beispiel 10 mit dem 8h lang abgebauten Produkt zeigte keinen Verlust der 3-Trifluormethyl-phenylurethan-seitenketten.

| Fraktion | Abbauzeit [h] | Ausbeute [g] |
|---|---|---|
| 0 | 0 | |
| 1 | 1 | 2.08 |
| 2 | 2 | 2.05 |
| 3 | 3 | 2.03 |
| 4 | 4 | 2.03 |
| 5 | 6 | 2.13 |
| 6 | 8 | 3.52 |

### Beispiel 12

### Herstellung von selektiv reflektierenden Schichten

Aus Cellulose-(3-trifluormethyl)phenylurethan, Diethylenglykoldimethacrylat und dem Photoinitiator 2,4,6-Trimethylbenzoyldiphenylphosphinoxid wurden analog Beispiel 1 selektiv reflektierende Folien hergestellt. Dabei wurden pro Gramm der Mischung aus Cellulose-(3-trifluormethyl)phenylurethan und Diethylenglykoldimethacrylat 10 mg Photoinitiator verwendet. Die nachfolgende Tabelle zeigt die verwendeten Mischungsverhältnisse zwischen Cellulose-(3-trifluormethyl)phenylurethan, im folgenden abgekürzt als CTPU, und Diethylenglykoldimethacrylat, im folgenden abgekürzt als DEDM, sowie die Selektivreflektion und Farbe der hergestellten Schichten.

| Polymer | Gewichtsprozent CTPU in der Mischung mit DEDM | Reflexionsmaximum [nm] | Farbe |
|---|---|---|---|
| CTPU aus Beispiel 10 | 41 | 683 | rot |
| CTPU aus Beispiel 10 | 45 | 595 | rotgold |
| CTPU aus Beispiel 10 | 46 | 592 | rotgold |
| CTPU aus Beispiel 11 Fraktion 1 | 44 | 607 | rotgold |
| CTPU aus Beispiel 11 Fraktion 2 | 45 | 522 | grün |
| CTPU aus Beispiel 11 Fraktion 2 | 44 | 570 | grüngol d |
| CTPU aus Beispiel 11 Fraktion 3 | 45 | 494 | türkis |
| CTPU aus Beispiel 11 Fraktion 3 | 44 | 548 | grüngol d |
| CTPU aus Beispiel 11 Fraktion 4 | 44 | 492 | türkis |
| CTPU aus Beispiel 11 Fraktion 5 | 44 | 497 | türkis |

### Beispiel 13

### Herstellung von selektiv reflektierenden Schichten mit Cellulose-(3-trifluormethyl)phenylurethan

Aus Cellulose-(3-trifluormethyl)phenylurethan, Dipropylenglykoldiacrylat und dem Photoinitiator 2,4,6-Trimethylbenzoyldiphenylphosphinoxid wurden Mischungen hergestellt. Dabei wurden pro Gramm der Mischung aus Cellulose-(3-trifluormethyl)phenylurethan und Dipropylenglykoldiacrylat 10 mg Photoinitiator verwendet. Die Mischungen wurden mit einem Motorrakel bei einer Vorschubgeschwindigkeit von 0.5 cm/s und mit einem Rakelspalt von 100 µm auf Glasplatten gerakelt. Die Schichten wurden dann durch Bestrahlen mit einer UVA-Lampe unter Stickstoff gehärtet. Die nachfolgende Tabelle zeigt die verwendeten Mischungsverhältnisse zwischen Cellulose-(3-trifluormethyl)phenylurethan, im folgenden abgekürzt als CTPU, und Dipropylenglykoldiacrylat, im folgenden abgekürzt als DPDA, sowie die Selektivreflektion und Farbe der hergestellten Schichten.

| Polymer | Gewichtsprozent CTPU in der Mischung mit DPDA | Reflexionsmaximum [nm] | Farbe |
|---|---|---|---|
| CTPU aus Beispiel 10 | 41 | 603 | rot |
| CTPU aus Beispiel 10 | 44 | 603 | rot |
| CTPU aus Beispiel 10 | 47 | 552 | grün |
| CTPU aus Beispiel 11 Fraktion 1 | 44 | 597 | rot |
| CTPU aus Beispiel 11 Fraktion 3 | 44 | 563 | grün |
| CTPU aus Beispiel 11 Fraktion 4 | 44 | nicht bestimmt | rotbraun |

## Patentansprüche

1. Polymerisierte flüssigkristalline Zusammensetzungen, erhältlich durch Strahlungshärtung von Mischungen, enthaltend
a) ein oder mehrere Cellulosederivate, in denen die Hydroxylgruppen der Cellulose ganz oder teilweise durch
- OR, -O-CO-NH-R, -O-CO-R oder -O-CO-OR ersetzt sind, wobei die Reste R gleich oder verschieden sein können und aliphatische oder aromatische Reste mit bis zu 20 C-Atomen bedeuten,
b) ein oder mehrere nicht flüssigkristalline polymerisierbare Monomere und
c) gewünschtenfalls weitere Zusätze.

2. Polymerisierte flüssigkristalline Zusammensetzungen nach Anspruch 1, in denen die Reste R folgende Bedeutung haben: C₁-C₁₂-Alkyl, wobei bis zu 4 nicht benachbarte CH₂-Gruppen durch Sauerstoff ersetzt sein können, Phenyl oder Naphthyl oder durch C₁-C₆-Alkyl, C₁-C₆-Alkoxy, C₁-C₆-Perfluoralkyl, Halogen, Cyano oder Nitro substituiertes Phenyl oder Naphthyl.

3. Polymerisierte flüssigkristalline Zusammensetzungen nach Anspruch 1 oder 2, in denen die Hydroxylgruppen der Cellulose ganz oder teilweise durch gleiche oder verschiedene Reste 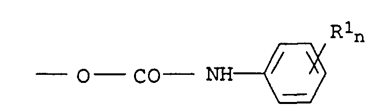 ersetzt sind, wobei R¹ Chlor, Methyl, Ethyl oder tert.-Butyl und n 0,1, 2 oder 3 bedeuten.

4. Polymerisierte flüssigkristalline Zusammensetzungen nach den Ansprüchen 1 bis 3, in denen die polymerisierbaren Monomeren aus der Gruppe der Acrylate, Methacrylate, Vinylether, Epoxide, Maleinsäureester, Crotonsäureester oder N-Vinylpyrrolidon stammen.

5. Polymerisierte flüssigkristalline Zusammensetzungen nach den Ansprüchen 1 bis 4, in denen die polymerisierbaren Monomeren Acrylate und/oder Methacrylate sind.

6. Polymerisierte flüssigkristalline Zusammensetzung nach den Ansprüchen 1 bis 5, in denen die polymerisierbaren Monomeren zwei oder mehr polymerisierbare Gruppen enthalten.

7. Verfahren zur Beschichtung von Substraten, dadurch gekennzeichnet, daß man eine Mischung gemäß Anspruch 1 auf ein Substrat aufträgt und durch Licht oder Elektronenstrahlen polymerisiert.

8. Verfahren zur Herstellung von Pigmenten, dadurch gekennzeichnet, daß man eine Mischung gemäß Anspruch 1 auf ein Substrat aufträgt, durch Licht oder Elektronenstrahlen polymerisiert, die Schicht vom Substrat ablöst und zu Pigmentpartikeln zerkleinert.

9. Verwendung der polymerisierten flüssigkristallinen Zusammensetzung gemäß den Ansprüchen 1 bis 6 als Beschichtungsmaterial für Gebrauchsgegenstände.

10. Lacke, enthaltend Pigmente gemäß Anspruch 8.

11. Verwendung der Lacke gemäß Anspruch 10 zum Lackieren von Fahrzeugkarosserien.

## Claims

1. A polymerized liquid-crystalline composition obtainable by radiation curing of a mixture comprising
a) one or more cellulose derivatives in which some or all of the hydroxyl groups of the cellulose are replaced by -OR, -O-CO-NH-R, -O-CO-R or -O-CO-OR, where each R can be identical or different and is an aliphatic or aromatic radical of up to 20 carbons,
b) one or more polymerizable monomers which are not liquid-crystalline and
c) if desired, further additives.

2. A composition as claimed in claim 1, where R is C₁-C₁₂-alkyl in which up to 4 nonadjacent CH₂ groups may be replaced by oxygen, or is phenyl or naphthyl which is unsubstituted or substituted by C₁-C₆-alkyl, C₁-C₆-alkoxy, C₁-C₆-perfluoroalkyl, halogen, cyano or nitro.

3. A composition as claimed in claim 1 or 2, where all or some of the cellulose hydroxyls are replaced by identical or different radicals 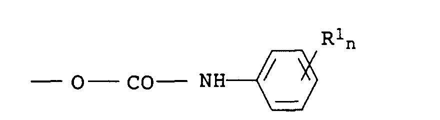 where R¹ is chlorine, methyl, ethyl or tert-butyl and n is 0, 1, 2 or 3.

4. A composition as claimed in any of claims 1 to 3, in which the polymerizable monomers are from the group consisting of acrylates, methacrylates, vinyl ethers, epoxides, maleic esters, crotonic esters and N-vinylpyrrolidone.

5. A composition as claimed in any of claims 1 to 4, where the polymerizable monomers are acrylates and/or methacrylates.

6. A composition as claimed in any of claims 1 to 5, where the polymerizable monomers contain two or more polymerizable groups.

7. A method of coating substrates, which comprises applying a mixture as claimed in claim 1 to a substrate and polymerizing it by means of light or electron beams.

8. A process for preparing pigments, which comprises applying a mixture as claimed in claim 1 to a substrate, polymerizing it by means of light or electron beams, detaching the layer from the substrate and comminuting it to form pigment particles.

9. The use of a composition as claimed in any of claims 1 to 6 as coating material for commodity articles.

10. A paint comprising pigments as set forth in claim 8.

11. The use of a paint as claimed in claim 10 for painting vehicle bodies.

## Revendications

1. Compositions de cristaux liquides polymérisées, pouvant être obtenues au moyen d'un durcissement par irradiation de mélanges contenant
a) un ou plusieurs dérivés de cellulose, dans lesquels les groupes hydroxyle de la cellulose sont totalement ou partiellement remplacés par des groupes -OR, -O-CO-NH-R, -O-CO-R ou -O-CO-OR, dans lesquels les résidus R peuvent être identiques ou différents et représentent des résidus aliphatiques ou aromatiques ayant jusqu'à 20 atomes de C;
b) un ou plusieurs monomères polymérisables non à cristaux liquides et
c) éventuellement d'autres additifs.

2. Compositions de cristaux liquides polymérisées selon la revendication 1, dans lesquelles les résidus R prennent la signification suivante: un groupe alkyle en C₁ à C₁₂, dans lequel jusqu'à 4 groupes CH₂ non vicinaux peuvent être remplacés par un atome d'oxygène, un groupe phényle ou naphtyle ou bien un groupe phényle ou naphtyle substitué par un groupe alkyle en C₁ à C₆, alcoxy en C₁ à C₆, perfluoroalkyle en C₁ à C₆, halogéno, cyano ou nitro.

3. Compositions de cristaux liquides polymérisées selon la revendication 1 ou 2, dans lesquelles les groupes hydroxyles de la cellulose sont totalement ou partiellement remplacés par des résidus identiques ou différents 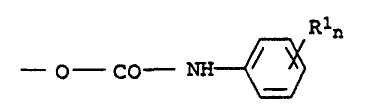 où R¹ représente un atome de chlore, un groupe méthyle, éthyle ou tert-butyle et n vaut 0, 1, 2 ou 3.

4. Compositions de cristaux liquides polymérisées selon les revendications 1 à 3, dans lesquelles les monomères polymérisables proviennent du groupe formé par les acrylates, les méthacrylates, les éthers vinyliques, les époxydes, les esters de l'acide maléique, les esters de l'acide crotonique ou la N-vinylpyrrolidone.

5. Compositions de cristaux liquides polymérisées selon les revendications 1 à 4, dans lesquelles les monomères polymérisables sont des acrylates et/ou des méthacrylates.

6. Composition à cristaux liquides polymérisée selon les revendications 1 à 5, dans lesquelles les monomères polymérisables contiennent deux groupes polymérisables ou plus.

7. Procédé pour revêtir des substrats, caractérisé en ce que l'on applique un mélange selon la revendication 1 sur un substrat et on le polymérise à l'aide de la lumière ou de faisceaux électroniques.

8. Procédé de préparation de pigments, caractérisé en ce que l'on applique un mélange selon la revendication 1 sur un substrat, on le polymérise à l'aide de la lumière ou de faisceaux électroniques, on détache la couche du substrat et on la broie en obtenant des particules de pigment.

9. Utilisation des compositions de cristaux liquides polymérisées selon les revendications 1 à 6, en tant que matière de revêtement pour des objets d'usage courant.

10. Laques, contenant des pigments selon la revendication 8.

11. Utilisation des laques selon la revendication 10 pour peindre les carrosseries d'automobile.
